# EUROPEAN PATENT APPLICATION

(11) **EP 3 451 787 A1**
(43) Date of publication of application: **06.03.2019**
(21) Application number: 18192110.7
(22) Date of filing: 31.08.2018
(51) Int. Cl.: H04W 76/15

(54) **METHODS AND APPARATUSES FOR ENABLING PHYSICAL LAYER SHARING AMONG MULTIPLE WIRELESS COMMUNICATION ENTITIES**

(30) Priority: 01.09.2017 US 201762553503 P
(71) Applicant: IDAC Holdings, Inc., Wilmington, Delaware 19809 (US)
(72) Inventor: KUO, Ping-Heng, London, GB NW7 1GX (GB); AHN, Jaehyun, 06222 Gangnam-gu. Seoul (KR); MOURAD, Alain, London, EC2A 3QR (GB); TURYAGYENDA, Charles, London, EC2A 3QR (GB)
(74) Representative: AWA Sweden AB

(57) **Abstract**

Methods and apparatuses are described herein for hosting protocol functionalities for a tenant node. A host node may receive, from a tenant node, a first packet adapted to a first radio access technology (RAT). The first packet may be encapsulated with a header including a functional split indicator indicating at least one protocol functionality to be performed by the host node. The host node may transmit, via the at least one protocol functionality, a second packet adapted to a second RAT. The second packet may be converted from the first packet by a convergence layer to adapt the second RAT. The host node may transmit the second packet and a third packet to one or more nodes. The second packet may include one or more protocol data units/service data units (PDUs/SDUs) associated with the tenant node. The third packet may include one or more PDUs/SDUs associated with the host node.

## Description

### CROSS REFERENCE TO RELATED APPLICATIONS

This application claims the benefit of U.S. provisional application No. 62/553,503, filed September 1, 2017, the contents of which is hereby incorporated by reference herein.

### BACKGROUND

Fog computing is a more distributed computing architecture where computing, control, storage, and networking functions can be processed across multiple end user devices with decentralized processing power. For example, fog computing puts a substantial amount of computing, control, storage, and networking functions at the edge of a network (e.g., local area network level or across multiple end user devices), rather than large, centralized devices such as gateways in core networks and large servers in data centers. Actuated by the high scalability requirements of services and applications in 5G, computation, storage, and connectivity resources in edge/fog computing can be amalgamated to perform radio access functions to provide high-performance communication services. This would necessarily require a major departure of multi-radio access technology (RAT) integration where different RATs can be used to fulfill inter-connections among physically separated devices in order to support fog/edge-enabled 5G radio access. Thus, methods and apparatuses that can share and process various protocol functionalities of multiple RATs across multiple devices are needed.

### SUMMARY

Methods and apparatuses are described herein for hosting protocol functionalities for a tenant node. For example, a host node may receive, from a tenant node, a first packet adapted to a first radio access technology (RAT). The first packet may be encapsulated with a header including a functional split indicator indicating at least one protocol functionality to be performed by the host node. The host node may then transmit, via the at least one protocol functionality, a second packet adapted to a second RAT. The second packet may be converted from the first packet by a convergence layer to adapt to the second RAT. The host node may transmit the second packet and a third packet to one or more nodes. The second packet may include one or more protocol data units/service data units (PDUs/SDUs) associated with the tenant node. The third packet may include one or more PDUs/SDUs associated with the host node.

The functional split indicator may include a packet data convergence protocol-radio link control (PDCP-RLC) split, a radio link control-medium access control (RLC-MAC) split, a medium access control-physical layer (MAC-PHY) split, intra-PDCP split, intra-RLC split, intra-MAC split, and intra-PHY split. At least one protocol functionality may include at least one operation performed by lower layers. The lower layers may comprise at least one of a PHY layer, a MAC layer, a RLC layer, or a PDCP layer. The host node may receive, from the tenant node, the first packet via a device-to-device (D2D) communication in the first RAT.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2A is a diagram illustrating an example user plane protocol stack;
FIG. 2B is a diagram illustrating an example control plane protocol stack;
FIG. 3 is a diagram illustrating an example protocol functionality sharing between two end nodes;
FIG. 4 is a diagram illustrating an example protocol functionality sharing where a host device lends its physical layer functionalities to multiple tenant devices;
FIG. 5 is a diagram illustrating an example multi-radio access technology (RAT) coordination-assisted protocol functionality sharing between two devices;
FIG. 6 is a diagram illustrating example operation of the convergence layer in a host device and a tenant device;
FIG. 7 is a diagram illustrating an example frame format that is encapsulated with a device-to-device (D2D) header;
FIG. 8 is a diagram illustrating an example host device which shares a physical layer with a tenant device based on a functional split indicator by the convergence layer;
FIG. 9 is a flow diagram illustrating an example procedure of FSI operation at a tenant device;
FIG. 10 is a diagram illustrating an example buffer management with shared-PHY for downlink;
FIG. 11 a diagram illustrating an example buffer management with shared-PHY for uplink;
FIG. 12 is a signaling diagram illustrating an example initialization procedure for sharing protocol functionality;
FIG. 13 is a diagram illustrating an example coordination entity within a host station that oversees the status of host station and the traffics from the host station and tenant station;
FIG. 14 is a diagram illustrating an example procedure for shared-protocol functionality to provide two traffic flows from a host station and a tenant station using the same radio transceiver; and
FIG. 15 is a diagram illustrating four different example scenarios for inter-cell interference mitigation based on a shared-PHY scheme.

### DETAILED DESCRIPTION

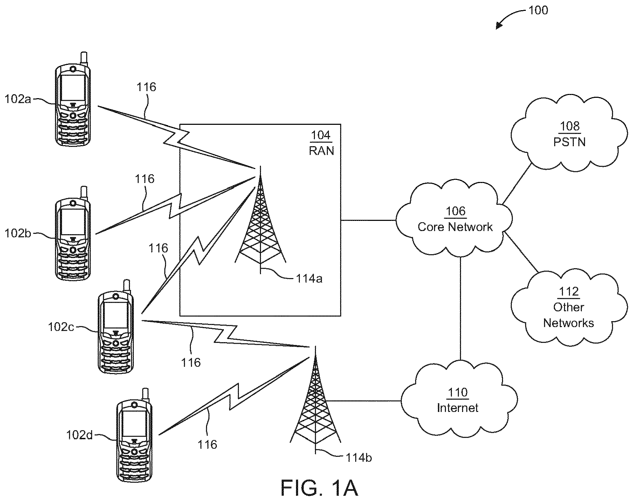

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a node, a host node, a tenant node, a network node, a relay node, a relay UE, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, a node, a host node, a tenant node, a network node, a relay node, a relay UE and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

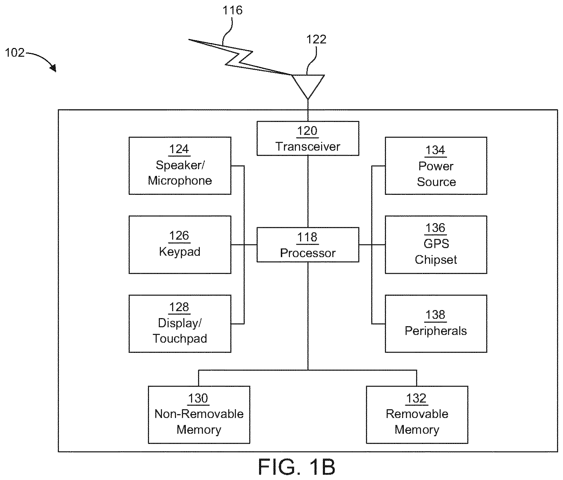

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit 139 to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the downlink (e.g., for reception)).

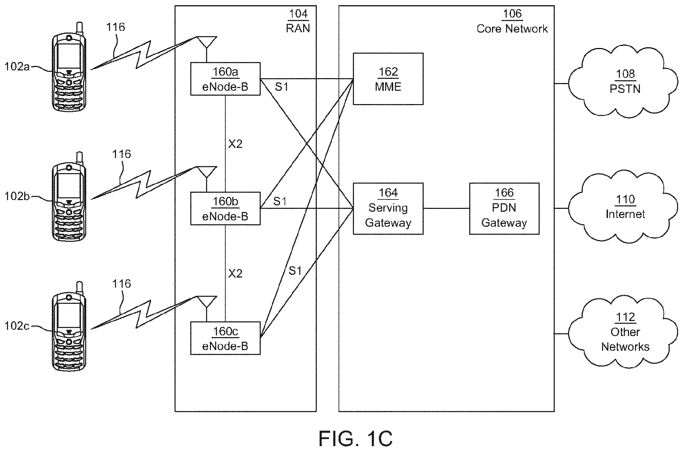

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

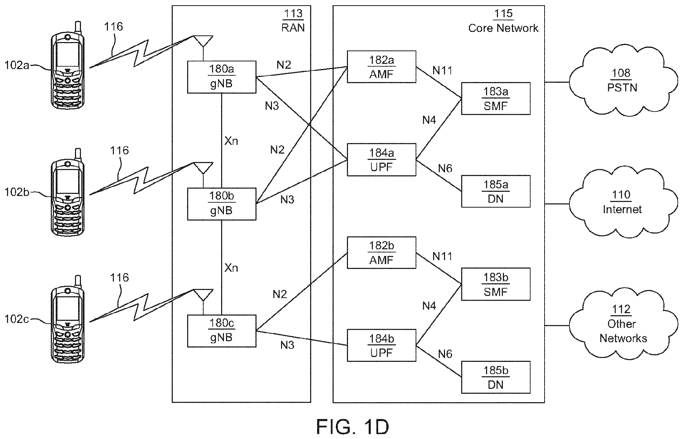

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-ab, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Due to the scalability requirements of certain services and applications envisioned for wireless telecommunications, including 5G and beyond, it may be desired to shift network computational resources to the network "edge" or deeper into the end-user domain or "fog." In particular, computation, storage, and connectivity resources in the edge and/or fog can be amalgamated or otherwise used to host, virtualize, and/or perform radio access functions, for example, to deliver high-performance communication services. In this context, different radio access technologies (RATs) may be used to facilitate inter-connections among physically separated computational resources in order to support fog-enabled radio access (e.g., for 5G). In one example, 5G may include technologies facilitating radio access based on edge/fog computing. It may be desired to provide a type of edge and/or fog RAN where at least one protocol functionalities of layers of multiple devices can be shared and processed in the same location.

In the context of edge and/or fog computing for radio access, the hardware and/or software computational resources of multiple entities can be coordinated or shared to process certain radio access functions. For example, amongst various ways of coordinating computational resources, an entity equipped with a radio transceiver may be able to lend some of its protocol functionalities to other devices nearby. Examples of the entity may include, but are not limited to, a WTRU, a user equipment (UE), a user device, a base station, a small cell base station, an access point (AP), a station (STA), a mobile station (MS), a node, a hosting node, a tenant node, a network node, a wearable device, a vehicle and an Internet of Thing (loT) device. When the entity lends some of its physical layer functionalities for other devices, this physical layer sharing scheme may be referred to as shared-PHY.

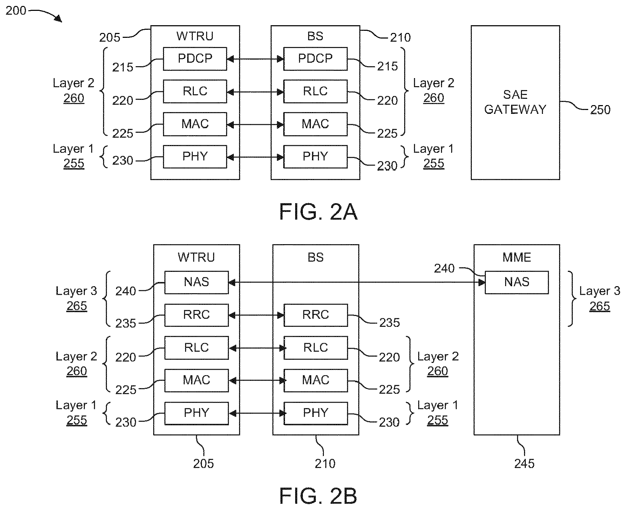

FIGs. 2A and 2B illustrates an example user plane protocol stack and a control plane protocol stack respectively, which may be used in combination with any of other embodiments described herein. A WTRU 205 and a BS 210 may include various protocol layers (e.g., layer1 255, layer2 260, layer3 265) for different protocol functionalities depending on the radio access technology (RAT) that the WTRU 205 and the BS 210 are using. For example, as illustrated in FIGs. 2A and 2B, when LTE is deployed as the RAT of the WTRU 205 and BS 210, the layer1 255 may include a physical layer (PHY) 230 or the like. The PHY 230 may handle coding/decoding, modulation/demodulation, physical-layer hybrid-ARQ processing, multiple antenna processing, the mapping of the signal to the appropriate physical time-frequency resources or the like. The PHY 230 may also handle mapping of transport channels to physical channels for MAC layer 225.

The layer2 260 may include, but is not limited to, a medium access control (MAC) layer 225, a radio link control (RLC) layer 220, and a packet data convergence protocol (PDCP) layer 215. The MAC layer 225 may handle the mapping between the logical channels and transport channels, schedule different WTRUs and their services in both uplink (UL) and downlink (DL) depending on their relative priorities, and select the most appropriate transport format. The scheduling functionality may be located in the BS 210. The MAC layer 225 may also offer services to the radio link control (RLC) layer 220, to inform the logical channels. The MAC layer 225 may also handle hybrid-ARQ retransmissions, multiplexing/demultiplexing data across multiple component carriers when carrier aggregation is used, or the like. The RLC layer 220 may handle segmentation/concatenation of Internet Protocol (IP) packets (i.e. RLC SDUs) from the Packet Data Convergence Protocol (PDCP) layer 215 into suitable sized RLC PDUs. The RLC layer 220 may also handle retransmission of erroneously received PDUs, as well as removal of duplicated PDUs. The RLC layer 220 may ensure in-sequence delivery of SDUs to upper layers. Depending on the type of service, the RLC layer 220 can be configured in different modes to perform some or all of these functions. In the user-plane, the PDCP layer 215 may be responsible for compressing/decompressing the headers of user plane IP packets using Robust Header Compression (ROHC) to enable efficient use of air interface bandwidth. The PDCP layer 215 may also perform ciphering of both user plane and control plane data. At the receiver side, the PDCP layer 215 may perform the corresponding deciphering and decompression operations. The BS 210 may be connected to the core network via system architecture evolution (SAE) gateway for user plane data.

The layer3 265 may include, but is not limited to, radio resource control (RRC) layer 235 non-access stratum (NAS) 240. The radio resource control (RRC) layer 235 in the BS 210 may make handover decisions based on neighbor cell measurements sent by the WTRU 205, page for the WTRU 205 over the air, broadcasts system information, controls WTRU measurement reporting such as the periodicity of channel quality information (CQI) reports and allocate cell-level temporary identifiers to active WTRUs. The RRC layer 235 may also execute transfer of WTRU context from the BS 210 to the target BS during handover, and perform integrity protection of RRC messages. The RRC layer 235 may be responsible for the setting up and maintenance of radio bearers. In the control-plane, the NAS 240 which runs between the MME 245 and the WTRU 205 may be used for control purposes such as network attach, authentication, setting up of bearers, mobility management, or the like. All NAS messages may be ciphered and integrity protected by the MME 245 and WTRU 205.

Although the protocol layers 215, 220, 225, 230, 235, 240 illustrated in FIGs. 2A and 2B are example protocol layers in the 3GPP architecture, the WTRU 205 and BS 210 may alternatively or additionally include different protocol layers depending on the radio access technology (RAT) that are deployed for the WTRU 205 and BS 210. For example, in case of wireless local area network (WLAN), the layer 1 may include a physical layer that handles encoding/decoding of signals, preamble generation/removal for synchronization, bit transmission/reception, or the like. The layer 2 may include a MAC layer and a logical link control (LLC) layer. The MAC layer may control how devices in a network gain access to a medium and permission to transmit data. The LLC layer may be responsible for identifying and encapsulating network layer protocols, and controls error checking and frame synchronization. Examples of the MAC and LLC layers may include, but are not limited to, Ethernet, WiFi, or ZigBee.

The layer 3 may include a network layer that provides the functional and procedural means of transferring variable length data sequences (called packets) from one node to another connected in different networks. The layer 4 may include a transport layer that provides the functional and procedural means of transferring variable-length data sequences from a source to a destination host, while maintaining the quality of service functions. The transport layer may control the reliability of a given link through flow control, segmentation/desegmentation, and error control. Examples of the transport layer may include, but are not limited to, the transmission control protocol (TCP), the user datagram protocol (UDP), and real-time transport protocol (RTP).

The layer 5 may include a session layer that controls the connections between the WTRU 205 and the BS 210. The session layer may establish, manage and terminate the connections between the local and remote application. The layer 5 may provide for full-duplex, half-duplex, or simplex operation, and establish checkpointing, adjournment, termination, restart procedures or the like. The layer 6 may include a presentation layer that establishes context between application-layer entities, in which the application-layer entities may use different syntax and semantics if the presentation service provides a mapping between them. If a mapping is available, presentation protocol data units may be encapsulated into session protocol data units and passed down the protocol stack. The presentation layer may provide independence from data representation by translating between application and network formats. The presentation layer may transform data into the form that the application accepts. The layer 7 may include an application layer that interacts with end users via software applications that implement a communicating component. The application-layer functions may include, but are not limited to, identifying communication partners, determining resource availability, and synchronizing communication.

As used herein, the term lower layer and higher layer may be defined in a relative fashion depending on the protocol split level implementing the protocol functionalities. In an example, the lower layer may indicate one or more layers (e.g., layer 1 and 2) that perform similar protocol functionalities as described in PHY 230, MAC 225, RLC 220, and PDCP 215 layers. The higher layer may indicate one or more layers (e.g., layer 3 or higher than layer 2) that perform similar protocol functionalities as described in the RRC 235 and NAS 240. In another example, if the lower layer includes only PHY 230, the higher layer may be all layers higher than the PHY 230 (e.g., MAC 225, RLC 220, PDCP 215, RRC 235, NAS 240). If the lower layer includes PHY 230, MAC 225, and RLC 220, then the higher layer may be all layers higher than the RLC 220 (e.g., PDCP 215, RRC 235, NAS 240). The term lower layer and higher layer may also be applied to a sub-layer level(s) (e.g., within a layer(s)). For example, a PHY 230 layer may be split into a lower PHY and an upper PHY based on the protocol functionality performed by the PHY 230. In another example, the MAC 225 may be split into a lower MAC and an upper MAC based on the protocol functionality performed by the MAC 225.

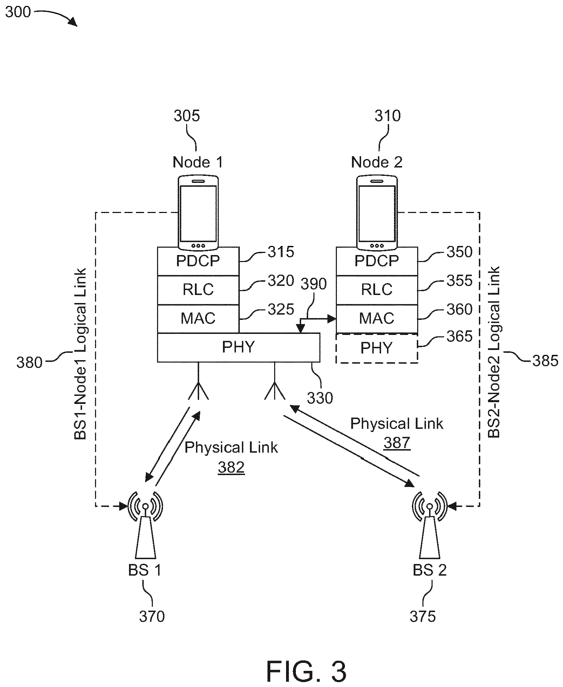

FIG. 3 illustrates an example protocol functionality sharing 300 between two end nodes 305, 310, which may be used in combination with any of other embodiments described herein. As illustrated in FIG.3, each of the nodes, node1 305 and node2 310, may include protocol stacks such as a packet data convergence control (PDCP) 315, 350, radio link control (RLC) 320, 355, medium access control (MAC) 325, 360, and physical layers (PHYs) 330, 365 to communicate with base stations, BS1 370 and BS2 375.

Each of the base stations, BS1 370 and BS2 375, may establish physical links 382, 387 with the node1 305 as well as logical links 380, 385 with the node1 305 and node2 310. As shown in FIG. 3, the node2 310 may shift its functionality of PHY 365 to the PHY 330 in the node1 305, for example, via device-to-device (D2D) communication 390. In other words, via D2D communication 390, the node1 305 may lend its PHY functionalities to the node2 310 to sustain the node2's 310 link with the BS1 370 or BS2 375. Examples of the D2D communication may include, but are not limited to, WiFi Direct, Near-field communication (NFC), Zigbee, Bluetooth, and Ultra-wideband. The PHY 330 of node1 305 can be described as a shared physical layer by node2 310, under the protocol functionality sharing scheme 300. This arrangement can facilitate joint signal and information processing, which may mitigate interference and/or increase battery efficiency as examples. Assuming that the node2 310 is connected to the node1 305 via a wireless local area network (WLAN) and the node1 305 is connected to BS1 370 and/or BS2 375 via a cellular network, the PHY 365 of node2 310 may be turned off for the cellular network while the node2 310 is shifting its functionality of PHY 365 to the PHY 330 of the node1 305. It should be note that the PHY 365 of node2 310 may be turned off only for the cellular network but other physical layers (e.g., PHY for WLAN) may not be turned off.

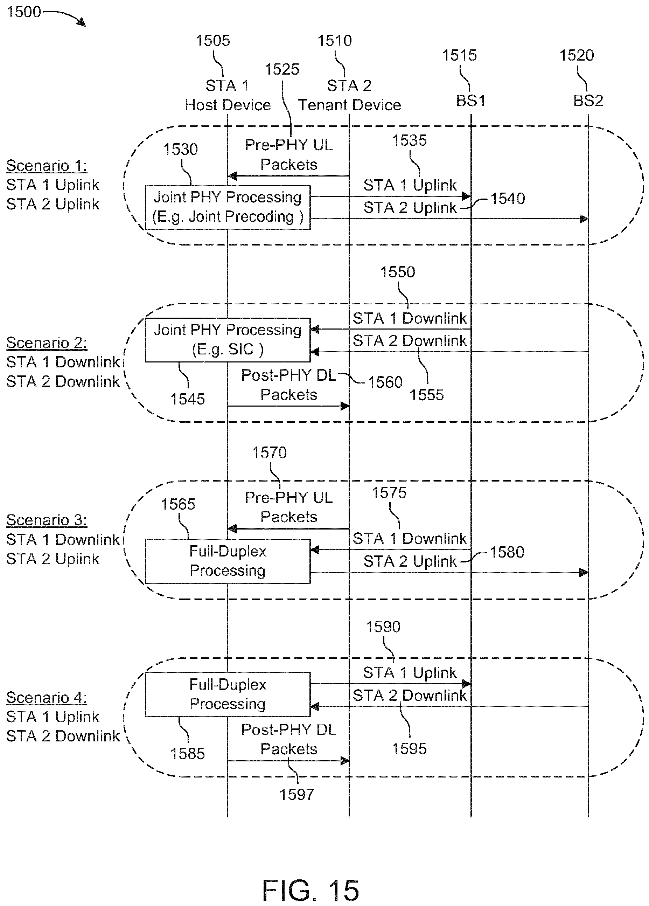

In the example illustrated in FIG. 3, the node1 305 and node2 310 may be served by the BS1 370 and BS2 375 respectively in an ultra-dense network (UDN) environment. A goal of such UDN environments may be one user per base station. It is possible that the end-user devices and access nodes will experience strong interference in such situations. Instead of applying radio resource (e.g., time/frequency/space) coordination mechanisms, which may result in inflexibility of resource allocation, interference mitigation may be conducted via joint signal processing in the shared physical layer (i.e. PHY 330), using various techniques. Such techniques may include joint precoding, successive interference cancellation (SIC), and/or full-duplex based interference cancelation. Further example details of interference mitigation are shown and described with respect to FIG. 15.

In an embodiment, assuming that the node1 305 is a sophisticated device (i.e. having relatively more capabilities) while the node2 310 is a low-cost (i.e. having relatively fewer capabilities) loT device, the loT device (i.e. node2 310) may reduce its battery consumption by transferring one or more transceiver functions (e.g., low-density parity-check (LDPC) encoding/decoding) to be physically undertaken by the node1 305. Such fog mechanisms can offload or facilitate offloading of tasks (e.g., resource-intense processing, or other processing) from a resource-constrained device. An example of a use case for such functionality sharing includes functionality sharing between user equipment and a wearable device. Technologies that allow offloading protocol stack processing from one device to another device may be implemented in 5G networks.

Throughout this disclosure, the device that lends (or shares) its protocol functionalities (i.e. functions performed by layers) to (or with) other devices can be referred to as a host node or host device (e.g., node1 305 in FIG. 3). The device that borrows protocol functionalities from the host node can be referred to as a tenant node or tenant device. It should be noted that the host node can be any device or network entity that has radio transceiver functionalities (e.g., a small cell access node) or the like. Examples of the host node (or host device) may include, but are not limited to, a WTRU, a UE, a mobile station, a cellular telephone, a smartphone, a laptop, a netbook, a personal computer, a vehicle, a drone, a base station, a base transceiver station (BTS), a Node-B, an eNode B, a Home Node B, a Home eNode B, a gNB, a NR NodeB, a small cell base station, a femto base station, a relay node, a relay UE, an access point (AP), a wireless router. Examples of the tenant node (or tenant device) may include, but are not limited to, a WTRU, a UE, a mobile station, a cellular telephone, a personal digital assistant (PDA), a smartphone, a laptop, a netbook, a personal computer, a vehicle, a drone, a wireless sensor, a hotspot or Wi-Fi device, an Internet of Things (IoT) device, a watch or other wearable, a head-mounted display (HMDs). In some embodiments, a host node may also lend its protocol functionalities to multiple tenant nodes simultaneously, if the tenant nodes have that capability.

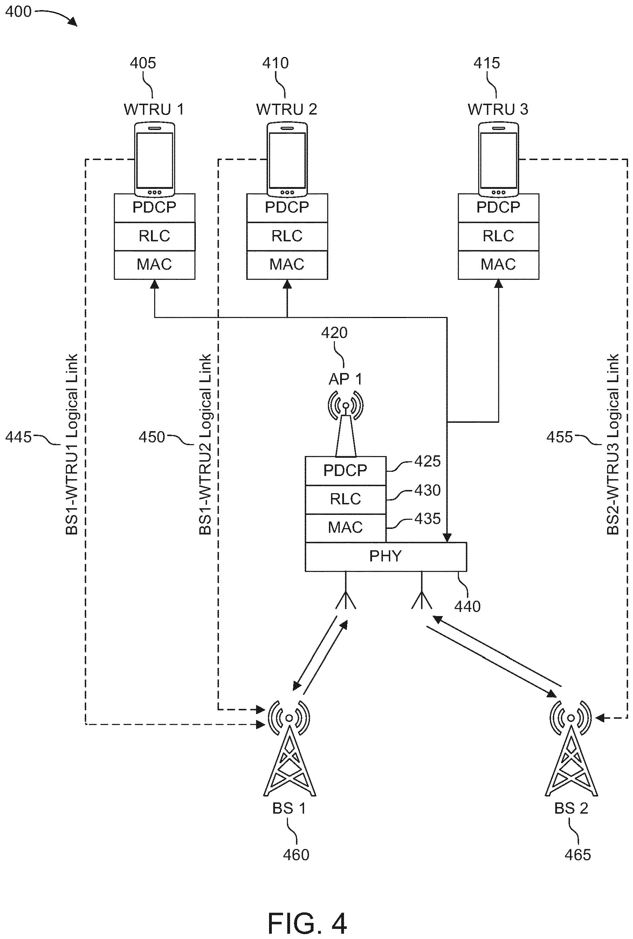

FIG. 4 illustrates an example protocol functionality sharing 400 where a host device lends its physical layer functionalities to multiple tenant devices, which may be used in combination with any of other embodiments described herein. As illustrated in FIG. 4, an access point (AP) AP1 420 with dual mode capability (e.g., LTE and Wi-Fi) may loan its physical layer 440 to multiple tenants, WTRU1 405, WTRU2 410, and WTRU3 415. The AP1 420 may be a small cell on-board a car, a customer-premises equipment (CPE), an on-board unit (OBU) that includes connectivity and computing capabilities, or a femtocell base station that includes PDCP 425, RLC 430, MAC 435, and PHY 440 layers as examples. The AP1 420 may have greater transmission power and/or a greater number of antennas than user equipment type WTRU devices, such as WTRU1 405, WTRU2 410, and WTRU3 415. This greater capability may facilitate the carrying out of more resource-intensive tasks by the AP1 420 for the WTRU1 405, WTRU2 410, or WTRU3 415, for example. The WTRU1 405 and WTRU2 410 may establish logical links 445, 450 with BS1 460 via the PHY 440 (i.e. shared physical layer). The WTRU3 415 may establish a logical link 455 with BS2 465 via the PHY 440 (i.e. shared physical layer).

An interface between a host node and one or more tenant nodes may be implemented in order to share at least one protocol functionality such as the physical layer functions. For example, an inter-device communication link such as device-to-device connection may be established to implement the shared-PHY, and methods of initializing an inter-device communication link supporting the shared-PHY scheme may also be implemented. Systems, methods, and devices for establishing and managing a communication interface between a host node and one or more tenant nodes to support shared-protocol functionalities (e.g., shared-PHY), initializing shared-protocol functionality cooperation between the host node and one or more tenant nodes, and multiplexing traffic flows throughout the protocol stacks in the host node are described herein.

In some implementations, a shared-protocol functionality scheme can be realized with devices that are equipped with capabilities supporting multiple radio access technologies (RATs). For example, a node (e.g., WTRU) may include radio transceiver modules for transmitting and receiving multiple types of radio signals such as cellular, WiFi, Bluetooth and/or NFC signals. Accordingly, if a shared-protocol functionality scheme is conducted among multiple devices for cellular connectivity, the involved devices (i.e., the host node and tenant node) may communicate, for example, directly via their built-in WiFi interfaces in order to transport cellular protocol data units (PDUs) and/or service data units (SDUs) for shared-protocol functionality. This is only one example permutation, and any other combination of communication and transport RATs are possible. For example, a host node (e.g., WTRU) may communicate with one or more tenant nodes (e.g., loT devices) via Zigbee interfaces in order to transport WiFi data packets to an AP. In this type of multi-RAT coordination, protocol functionality sharing among multiple devices for a first RAT can be enabled by communications using a second RAT.

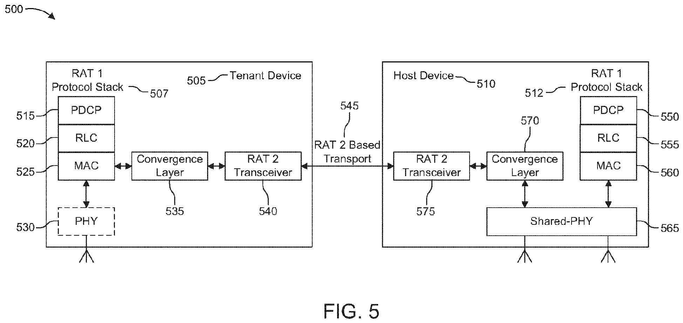

FIG. 5 illustrates an example multi-RAT coordination-assisted protocol functionality sharing 500 between two devices 505, 510, which may be used in combination with any of other embodiments described herein. It should be noted that although RAT 1 protocol stacks 507, 512 are split between MAC 525, 560 and PHY 530, 565 layers, the split level is not restricted to these layers and multiple (or different) split levels could be used over multiple users depending on the capabilities of the devices. For example, the split level may be indicated by a functional split indication (FSI) to indicate one of different split level options that the host/tenant nodes can recognize with the FSI. The split may happen between/within/across protocol layers. Examples of the split levels may include, but are not limited to, packet data convergence protocol-radio link control (PDCP-RLC) split, a radio link control-medium access control (RLC-MAC) split, a medium access control-physical layer (MAC-PHY) split, intra-PDCP split, intra-RLC split, intra-MAC split, or intra-PHY split. As used herein, the terms functional split indication and functional split indicator may be interchangeably used throughout this disclosure.

As illustrated in FIG. 5, a convergence layer (CVG) 535, 570 may be included within the tenant device 505 or host device 510 to adapt between the two RATs (e.g., RAT1 and RAT2). The term convergence layer may be interchangeably referred to as an adaptation layer or translation layer. The convergence layer 535, 570 may convert PDUs/SDUs of the first RAT to a data format (e.g., packet structure) that is applicable to (e.g., recognizable by) the communication protocols of the second RAT. By the convergence layer 535, 570, protocol stacks within the same RAT can be shared by different devices via a transport interface based on the same or different RAT. For example, a transport block (i.e. MAC PDU) processed by the MAC 525 of the RAT1 protocol stack 507 in the tenant device 505 may be converted by the convergence layer 535 to adapt the data format of RAT2 transceiver 540 of the host device 510. The transport block adapted to RAT2 may be transmitted, for example, via the RAT2 based transport 545, to the host device 510. The transport block received at the RAT2 transceiver 575 may be converted again by the convergence layer 570 to adapt the data format of RAT1. The re-adapted transport block may be passed to the shared-PHY 565 to be transmitted to one or more BSs. Accordingly, a convergence layer can be equipped with different features relating to the enablement of inter-device interface (e.g., formulating the header) for protocol sharing purposes. The transport interface (e.g., RAT2 based transport 545) between the host device 510 and tenant device 505 can be referred to as a D2D communication or device-haul. In some embodiments, RAT1 and RAT2 illustrated in FIG. 5 may be the same RAT. In this case, the host device 510 may lend (or shares) its protocol functionalities (i.e. functions performed by layers) to the tenant device 505 with more complex resource scheduling to conduct efficient interference mitigation. The convergence layer can control D2D (or device-haul) link configuration (e.g., buffer management, packet segmentation) to accommodate performance requirements (e.g., latency).

The convergence layer 535 in the tenant device 505 may be able to perform one or more of data transmission, data reception, and/or control functions. Data transmission functions can formulate and add a header to the information block that is to be shared with the host device 510 via the second RAT for further lower layer processing at the host device 510. The data transmission function may also forward the information block to the second RAT transmitter (i.e. RAT2 transceiver 540) after a header is added.

Data reception functions can remove the header embedded in the information block that was received from the host device 510 via the second RAT. The data reception function may also read the header embedded in the information block that was received from the host device 510 via the second RAT for further upper layer processing at the tenant device 505. The data reception function may forward the information block that was received from the host device 510 after header removal to the appropriate protocol stack for further upper layer processing at the tenant device 505 in accordance with information read from the header.

Control functions may establish a device-haul connection (or D2D connection) with the host device 510. The control function may include radio resource negotiation and management for device-haul on RAT2, and/or error handling and information exchange with higher layers (e.g., above the physical layer) of RAT1. The radio resource negotiation and management for device-haul on RAT2 can include one or more of buffer management, radio bearer (QoS-) based resource allocation, and/or exchange of information relating to available resources on RAT2 with the host device 510. Error handling and information exchange with RAT1 higher layers can address incidents such as packet loss in device-haul, and/or link failure in device-haul.

Similarly, the convergence layer 570 in the host device 510 may be able to perform one or more of data transmission, data reception, and/or control functions. Data transmission functions can formulate and add a header to the information block that is to be shared with the tenant device 505 via the second RAT for further processing at the tenant device. The data transmission function may forward the information block to the second RAT transmitter (i.e. RAT2 transceiver 575) after header addition.

Data reception functions can remove the header embedded in the information block that was received from the tenant device 505 via the second RAT. The data reception function may also read the header embedded in the information block that was received from the tenant device 505 via the second RAT for sharing of lower layer (e.g., with respect to the split) functionalities at the host device 510. The data reception function may forward the information block that was received from the tenant device 505 after header removal to the appropriate protocol stack for further lower layer processing at the host device 510 in accordance with information read from the header.

Control functions can establish a device-haul connection (or D2D connection) with the tenant device 505. The control function may include radio resource negotiation and management for device-haul on RAT2, and/or error handling and information exchange with higher layers of RAT1. The radio resource negotiation and management for device-haul on RAT2 can include one or more of_buffer management, radio bearer (QoS-) based resource allocation and/or exchange of information relating to available resources on RAT2 with the tenant device. Error handling and information exchange with RAT1 higher layers can address incidents such as packet loss in device-haul and/or link failure in device-haul.

As described above, the convergence layer 535, 570 may add a header onto the D2D packet (or device-haul packet) and/or read a header from the D2D packet. The D2D packet may be a data packet that is adapted to the RAT of the D2D communication (or device-haul) such as RAT2 (e.g., WLAN). The header can include one or more fields indicating one or more of labeling for the shared protocol functionality packet, a tenant/host device identification, a functional split indication (FSI), a performance requirement indication, a D2D or device-haul (RAT 2) data/control indication, a RAT 1 (e.g., cellular) data/control indication, a sequence number (and/or time stamp), or the like. The header may be interchangeably referred to as a D2D header or a device-haul header.

Labeling for the D2D packet may indicate that this information block is for protocol sharing. A tenant/host device identification may indicate which tenant device 505 or host device 510 owns the information block and/or from and/or to where the information block is transmitted. A functional split indication (FSI) may indicate at which point within a layer and/or where in the protocol stack, the tenant device and/or host device may begin to share at least one protocol functionality as described in FIGs 2A and 2B. A performance requirement indication may indicate a performance requirement (e.g., latency, data rate) of the information block to be transported on the D2D communication (or device-haul). A D2D or device-haul (RAT 2) data/control indication may indicate whether the packet conveys data-plane or control-plane information for the D2D (or device-haul) connection. A RAT 1 (e.g., cellular) data/control indication may indicate whether the packet conveys data-plane or control-plane information for the tenant device 505 (e.g., for higher-layer split to distinguish radio bearer types). A sequence number and/or time stamp may be used for in-ordering operations.

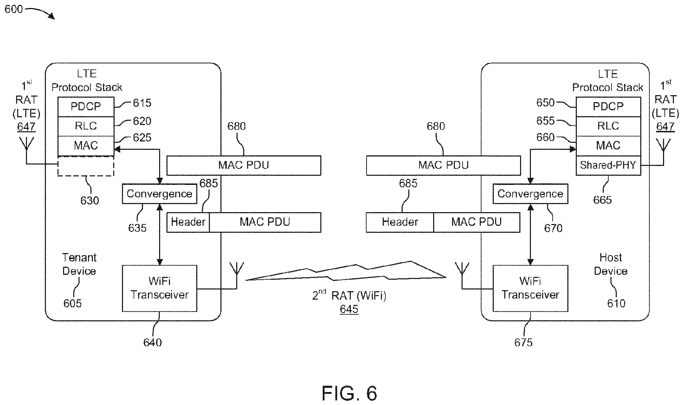

FIG. 6 illustrates example operation of the convergence layer 635, 670 in a host device 610 and a tenant device 605, which may be used in combination with any of other embodiments described herein. In this example, the first RAT 647 corresponds to a 3GPP access technology such as LTE and the second RAT 645 corresponds to a non-3GPP access technology such as WiFi. As illustrated in FIG. 6, the tenant device 605 may be equipped with the LTE protocol stack 630 that includes several protocol layers such as PDCP 615, RLC 620, MAC 625 to process PDUs/SDUs to be transmitted to or received from the host device 610 using the convergence layer 635. For example, in the uplink transmission (i.e. from the tenant device 605 to the host device 610), MAC 625 layer sends the MAC PDU 680 to the convergence layer 635 where a header 685 is added (or encapsulated) to the MAC PDU 680 to adapt the second RAT (i.e. WiFi) 645. Specifically, the MAC PDU 680 encapsulated with the header 685 may be sent to WiFi transceiver 640 to be transmitted to the host device 610 via D2D communication over WiFi 645. In the downlink reception (i.e. from the host device 610 to the tenant device 605), once the WiFi transceiver 640 receives the MAC PDU 680 that is encapsulated with the header 685, the WiFi transceiver 640 sends the MAC PDU 680 to the convergence layer 635 where a header 685 is removed to adapt the first RAT (i.e. LTE) 647. Specifically, the MAC PDU 680 (without the header 685) may be sent to the MAC 625 layer to be further processed by the LTE protocol stack 630.

Similarly, the host device 610 may be equipped with the LTE protocol stack 630 that includes several protocol layers such as PDCP 650, RLC 655, MAC 660 to process PDUs/SDUs to be transmitted to or received from the tenant device 605 using the convergence layer 635. For example, in the downlink transmission (i.e. from the host device 610 to the tenant device 605), MAC 660 layer receives the MAC SDU (not shown in FIG. 5) from the shared-PHY 665 and sends the MAC PDU 680 to the convergence layer 670 where a header 685 is added (or encapsulated) to the MAC PDU 680 to adapt the second RAT (i.e. WiFi) 645. Specifically, the MAC PDU 680 encapsulated with the header 685 may be sent to the WiFi transceiver 675 to be transmitted to the tenant device 605 via D2D communication over WiFi 645. In the uplink reception (i.e. from the tenant device 605 to the host device 610), once the WiFi transceiver 675 receives the MAC PDU 680 that is encapsulated with the header 685, the WiFi transceiver 675 sends the MAC PDU 680 to the convergence layer 670 where a header 685 is removed to adapt the first RAT (i.e. LTE) 647. Specifically, the MAC PDU 680 (without the header 685) may be sent to the MAC 660 layer and the shared-PHY 665 to be transmitted over the first RAT (i.e. LTE).

Although it is not illustrated in FIG. 6, the host device 610 and the tenant device 605 may include multiple, different protocol stacks and adapt the multiple, different RATs using the convergence layer 635, 670.. For example, the first RAT 647 may be a WLAN, and the second RAT 645 may be a low-power wide area network (LPWAN).

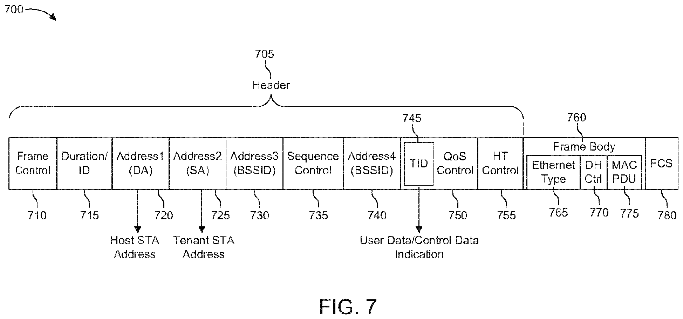

FIG. 7 illustrates an example frame format 700 that is encapsulated with a D2D header 705, which may be used in combination with any of other embodiments described herein. In this example, the D2D header 705 is based on IEEE 802.11ac header format; although any suitable format can be used. The example D2D header 705 of FIG. 7 assumes an uplink MAC PDU to be transported from a tenant device to a host device, along with control information for device-haul control (DH-Ctrl 770).

As illustrated in FIG. 7, the example frame 700 may comprise a D2D header 705, a frame body 760, and a frame check sequence (FCS) 780. The D2D header 705 may include a frame control field 710, a duration/ID 715, a destination address (DA) 720, a source address (SA) 725, a basic service set ID (BSSID) 730, a sequence control field 735, a quality of service (QoS) control field 750 , and a high throughput (HT) control field 755. In this example D2D header 705, the destination address (DA) 720 and the source address (SA) 725 may be used to indicate the host device address and the tenant device address, respectively (or vice versa). The QoS control field 750 may include a traffic identifier (TID field 745 that indicates how device-haul control (or D2D control) and MAC PDU information are allocated in the frame body 760, so that both data and control can be multiplexed in the same frame. Although it is not shown in FIG. 7, the D2D header 705 may include an information element (IE)/field for a functional split indicator that indicates one or more protocol functionalities performed by a host device in the existing IE/field or new IE/field of the D2D header 705. For example, the HT control field 755 may include reserved bits for the functional split indicator to indicate the protocol functionalities. The frame body 760 may include an Ethernet type 765, a device-haul control (DH Ctrl) field 770, MAC PDU 775, or the like. The DH Ctrl field 770 may include control information such as a modulation and coding scheme (MCS), resource allocations, or the like. In one embodiment, the frame body may be used to carry MAC PDU for data only. In another embodiment, the frame body may be used to carry DH Ctrl without data only. In yet another embodiment, the frame body may be used to carry both MAC PDU for data and DH Ctrl. One example of information related to the DH Ctrl may be buffer management control signaling

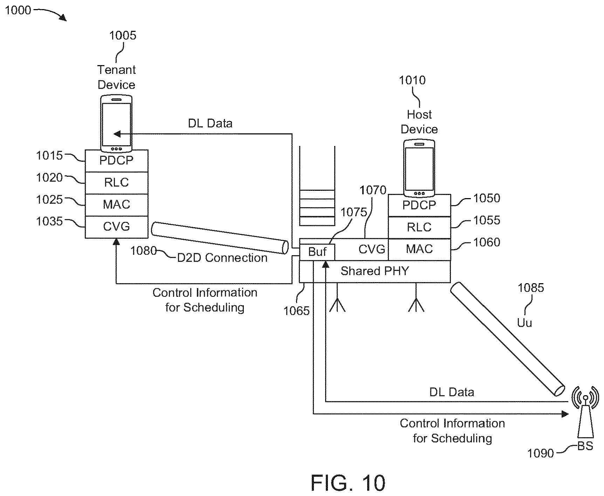

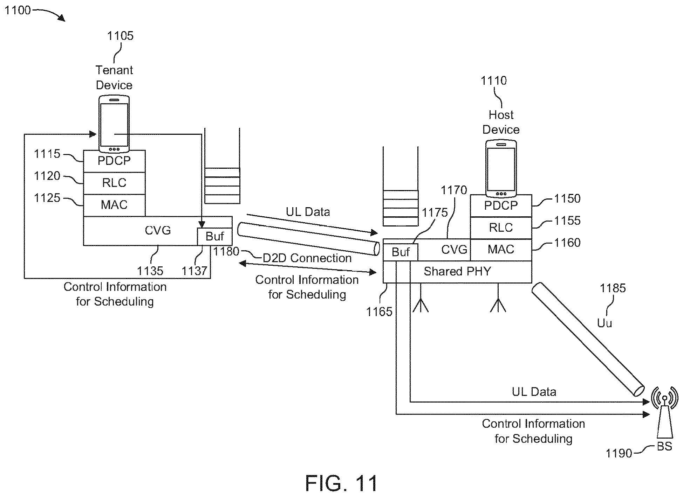

(e.g., described in FIGs. 10 and 11). The information may include a MAC CE, RLC control PDU, PDCP control PDU, RRC signaling, or the like which can be conveyed in the MAC PDU.

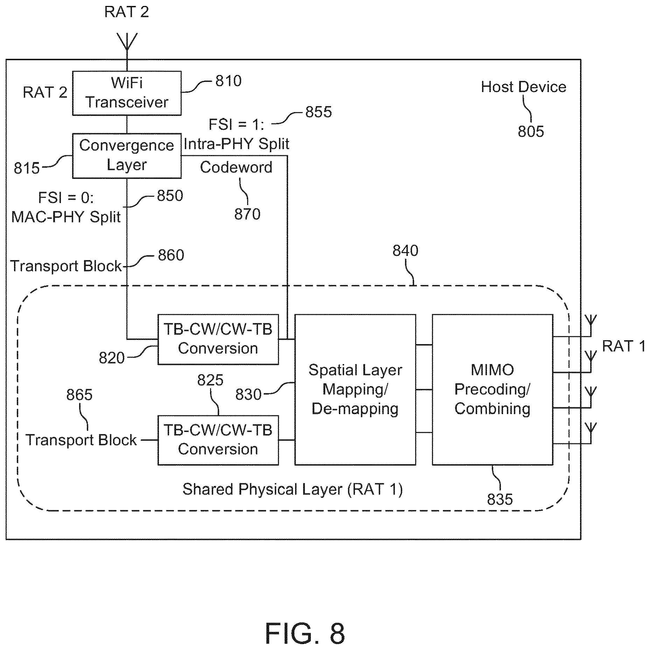

FIG. 8 illustrates an example host device 805 which shares a physical layer 840 with a tenant device based on a functional split indicator (FSI) by the convergence layer, which may be used in combination with any of other embodiments described herein. As described above, an FSI can be used in the header to indicate which one or more protocol functionalities or functional blocks will be shared at the host device 805 if an adaptive function split level scheme is assumed. For example, the functional split can be MAC-PHY split (FSI = 0) 850 at one time instant, and become Intra-PHY split (FSI = 1) 855 at another time instant. In this example, the functional split is adaptively switched between MAC-PHY split (FSI = 0) 850 and intra-PHY split (FSI = 1) 855. In addition the FSI may distinguish between two possible functional split options, for example, a MAC-PHY split (FSI=0) 850 and an intra-PHY split (FSI=1) 855. The MAC-PHY split (FSI = 0) 850 may indicate that the tenant device performs protocol functionalities higher than or equal to MAC layer and the host device 805 performs protocol functionalities lower than or equal to PHY layer. The intra-PHY split (FSI = 1) 855 may indicate that the tenant device performs some protocol functionalities within PHY (e.g., coding/decoding) and the host device 805 performs other protocol functionalities within PHY (e.g., mapping/demapping).

Based on the value of the FSI within the header, the convergence layer 815 of the host device 805 may determine to which protocol functionality (e.g., functional hardware and/or software) it should forward the information block received from the WiFi transceiver 810. In this example, if FSI=0 850, the information block (including both data and control) received from the tenant device is simply a MAC PDU (i.e. transport block 860). In order to form a codeword from the transport block 860, the host device 805 is required to perform protocol functionalities (e.g., functional hardware and/or software) such as adding cyclic redundancy check (CRC) bits, channel coding, or the like. Specifically, when the host device 805 receives a transport block 860 from the tenant device, the convergence layer 815 simply sends the transport block 860 to the TB-CW/CW-TB conversion block 820 where the transport block 860 is converted to a codeword. The converted codeword is processed by the spatial layer mapping/demapping block 830 and MIMO precoding/combining block 835 to further transmit to one or more base stations. When the host device 805 sends a codeword to the tenant device, the codeword processed through the spatial layer mapping/demapping block 830 and the MIMO precoding/combining block 835 is carried onto the TB-CW/CW-TB conversion block 820 where the codeword is converted to a transport block 860. The converted transport block 860 is sent to the convergence layer 815 to further transmit to the tenant device.

On the other hand, if FSI=1 855, since the tenant device has already converted a transport block into a codeword, the information block received from the WiFi transceiver 810 is simply a codeword 870 which requires one or more protocol functionalities to carry out operations such as mapping/demapping, MIMO precoding/combining, or the like. Specifically, once the codeword (generated by the tenant device) is forwarded to the shared PHY layer 840 of the host device 805, the shared PHY layer 840 may carry on with the required MIMO processing 835 and spatial layer mapping 830 onto the codeword 870. It should be noted that the shared PHY layer 840 may still process a transport block 865 received from a MAC layer of the host device 805 while it is processing the transport block 860 or the codeword 870 received from the tenant device. Specifically, the TB-CW/CW-TB conversion block 825 may convert a transport block 865 received from the MAC layer of the host device 805 to a codeword regardless of the transport block 860 and/or the codeword 870 received from the tenant device. This means that traffic from the host device 805 and traffic from the tenant device can be multiplexed at the shared PHY 840 to transmit over the RAT1.

Although FIG. 8 illustrates a MAC-PHY split (FSI=0) 850 and an intra-PHY split (FSI=1) 855 as an examples of FSI, FSI is not limited to the MAC-PHY split (FSI=0) 850 and intra-PHY split (FSI=1) 855 and may further include a packet data convergence protocol-radio link control (PDCP-RLC) split, a radio link control-medium access control (RLC-MAC) split, intra-PDCP split, intra-RLC split, intra-MAC split, or the like.

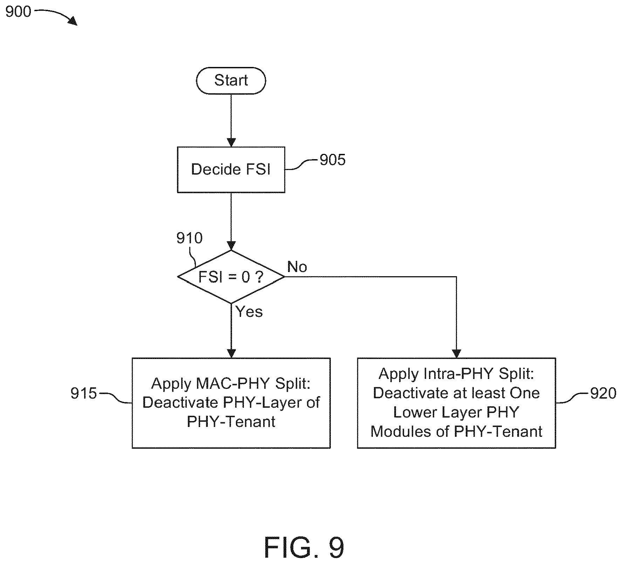

Apart from being included in the D2D header, the FSI may be applied to the protocol functionalities of the tenant device, for example, to de-activate PHY functionalities of the tenant device accordingly. FIG. 9 illustrates an example procedure of the FSI operation at a tenant device, which may be used in combination with any of other embodiments described herein. Using the example of a binary FSI, the tenant device may de-activate certain protocol functionality in the tenant device as illustrated in FIG. 9. For example, at step 905, the tenant device may decide the binary value of FSI generated at the convergence layer of the tenant device. At step 910, if the binary value of FSI equals to 0, the tenant device decides that the FSI is a MAC-PHY split. In case of the MAC-PHY split, at step 915, the tenant device may apply the MAC-PHY split onto the PHY of the tenant device. Specifically, the tenant device may deactivate the PHY layer of the tenant device because the tenant device borrows the functions of PHY layer from the host device. In this example, the tenant device may only deactivate the PHY layer of RAT from which the tenant device borrows. For example, if a tenant device decides to borrow (or use) a physical layer of RAT1 (e.g., LTE) from a host device via the D2D connection of RAT2 (e.g., WiFi), the tenant device may only deactivate the PHY of RAT1 (e.g., LTE) in the tenant device's RAT1 protocol stack (e.g., LTE protocol stack). The PHY of RAT2 (e.g., WiFi) in the tenant device's RAT2 protocol stack (e.g., WiFi protocol stack) may not be deactivated by the MAC-PHY split (i.e. FSI = 0).

At step 910, if the binary value of FSI equals to 1, the tenant device decides that the FSI is an Intra-PHY split. In case of the intra-PHY split, at step 920, the tenant device may apply the Intra-PHY split onto the PHY of the tenant device. Specifically, the tenant device may deactivate at least one functions of the PHY layer of the tenant device because the tenant device borrows other functions of PHY layer from the host device. For example, if a tenant device decides to use its own TB-CW/CW-TB conversion, but borrow (or use) spatial layer mapping/demapping function and MIMO precoding/combining function of a PHY from a host device, the tenant device may only deactivate the spatial layer mapping/demapping function and MIMO precoding/combining function of the tenant device's PHY. Similar to step 915, the tenant device may only deactivate functions of PHY of RAT from which the tenant device borrows.

In some embodiments, the functional split may be determined and fixed during D2D connection establishment. In this case, inclusion of an FSI in the D2D header may be omitted as functional split is non-adaptive. Further, the functional split can be determined based on end-to-end latency requirements. For example, if a low latency is needed (e.g., a low latency for URLLC use cases), a functional split may be chosen in accordance to the lowest achievable end-to-end latency (e.g., as attributed to device-haul delay and/or processing delay).

In a protocol functionality sharing scheme, packet transmission may be affected by the resource allocation to both the first RAT interface (e.g., a unique user (UU) interface or other WTRU to RAN interface) and the second RAT interface (i.e., device-haul or D2D interface), where UU resources are allocated by RAT 1 and D2D resources are allocated by RAT 2. Resources may therefore be scheduled jointly across the RAT 2 (i.e., device-haul or D2D) and RAT 1 (e.g., UU) interfaces. Such joint scheduling may imply one or more mechanisms for handling the forwarding of packets belonging to the tenant device of remote WTRUs or WTRUs co-located with the host device. For example, some packets may be preempted or buffered in order to satisfy the requirements of all bearers of all WTRUs (remote or co-located).

FIGs. 10 and 11 illustrate example buffer managements 1000, 1100 with shared-PHY for downlink (DL) and uplink (UL) respectively, which may be used in combination with any of other embodiments described herein. In the example of FIG. 10, there is only one buffer 1075 at the host device 1010 to manage for DL over the D2D connection 1080, whereas in the example of FIG. 11 there are two buffers 1137, 1165 to manage for UL over the D2D connection 1080; one buffer 1137 for a CVG layer 1035 at the tenant device 1105 and the other buffer 1165 for a CVG layer 1170 at the host device 1110. In FIG. 10, to prevent buffer overflow in DL, the CVG layer 1070 may report the buffer status to the peer CVG layer 1035 (i.e., the CVG layer 1035 of the tenant device 1005), or provide a warning message to the upper layers 1050, 1055, 1060 of the host device 1010 if the total size of buffered packets exceeds or is over a certain threshold. The tenant device 1005 may then or thereafter decide to revert to a non-shared-PHY mode or to request the reconfiguration of radio bearers. The host device 1010 may also conduct flow control (e.g., a packet data convergence protocol (PDCP) discard operation) in response to receiving the warning message. If packet losses occur due to buffer overflow, the CVG layer 1070 may indicate an error to the peer CVG layer 1035, and/or may indicate the error to the shared PHY layer 1065.

In FIG. 11, buffer management by the CVG layer 1135 of a tenant device 1105 can be used to handle data packets over the D2D connection 1180 in UL. In order to prevent buffer overflow in UL, the CVG layer 1135 of the tenant device 1105 may indicate buffer status to the upper layers 1115, 1120, 1125 of the tenant device 1135 or to the peer CVG layer 1170 of the host device 1110 if the size of buffered packets becomes or is greater than a certain threshold. The tenant device 1105 may then conduct flow control (e.g., a PDCP discard operation). The peer CVG layer 1170 may also determine whether to allocate (and may so allocate) more resources to D2D connection 1180 (or device-haul), (e.g., a PCF duration increase in the Wi-Fi RAT2 case, Wi-Fi channel aggregation, an allocation of more resources by a schedule triggering message in an 802.11ax case, or the like.) If a buffer overflow occurs, the peer CVG layer 1170 may indicate an error to a higher layer 1150, 1155, 1160.

Buffer management by the CVG layer 1070, 1170 of the host device 1010, 1110 can be used to coordinate between RAT 2 (i.e., D2D connection 1080, 1180 or device-haul) resource allocation and RAT 1 (e.g., UU interface 1085, 1185) resource allocation. The CVG layer 1070, 1170 of the host device 1010, 1110 can provide the MAC layer 1025, 1125 of the corresponding tenant device 1005, 1105 with the status of buffered packets over the upper layer 1015, 1020, 1025, 1115, 1120, 1125 of the tenant device 1005, 1105. This information may be used to calculate the status of buffered packets to be transmitted. This information may be reported to the base station (BS) 1090, 1190, which may adapt UL resource allocation accordingly. If a buffer overflow occurs on the CVG layer 1070, 1170 and packets are lost, an error may be reported to the peer CVG layer 1005, 1105. The peer CVG layer 1005, 1105 may report the packet loss to the upper layer 1015, 1020, 1025, 1115, 1120, 1125 and then the upper layer 1015, 1020, 1025, 1115, 1120, 1125 may carry out flow control or packet retransmission if necessary.

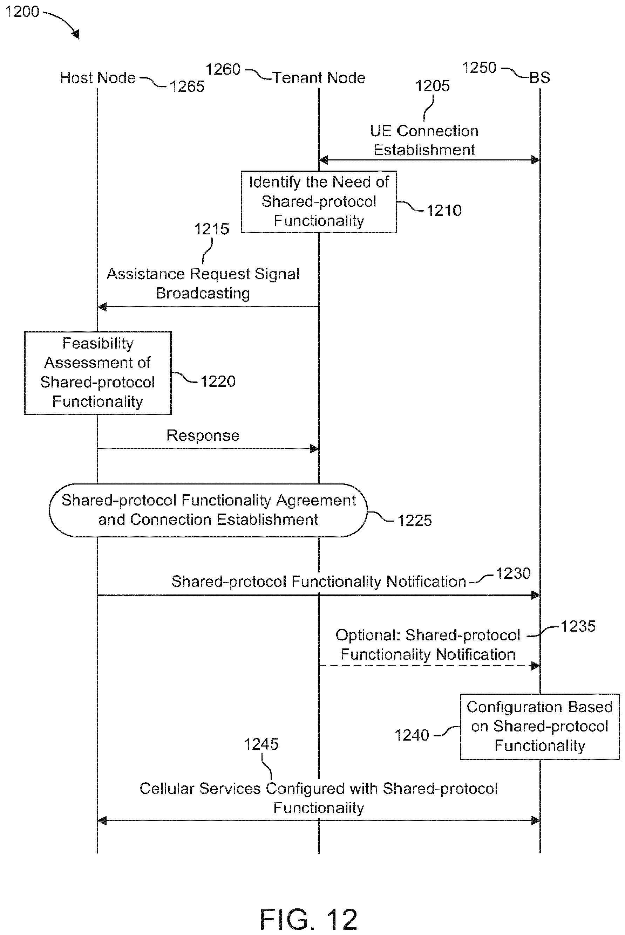

FIG. 12 illustrates an example initialization procedure 1200 for sharing protocol functionality, which may be used in combination with any of other embodiments described herein. At step 1205, peer stations (STAs) or nodes (e.g., the potential host node and potential tenant) may first decode system information (e.g., master information block (MIB) and system information block (SIB)) that is broadcast by a base station (BS) 1250 in order to establish their connection with the network. This step may be performed in the same manner as in existing systems, where each STA transmits a physical random access channel (PRACH) signal for network entry. During establishment of the connection, the network and the STAs may exchange information relating to potential opportunities for carrying out sharing protocol functionality. For example, each STA may inform the network of whether or not it is capable of lending its protocol functionality of layers to other STAs. The network may inform the newly connected STAs whether or not there is/are network entities (e.g., one or more STAs in the same cell) that are potentially able to lend protocol functionality of layers.

At step 1210, for cases where there is at least one entity in the network that can act as a host node 1265 (e.g., as informed by the network during connection establishment), the potential tenant node (e.g., tenant node 1260) may periodically check whether it would be beneficial to undertake protocol functionality sharing operations. For example, the potential tenant node (e.g., tenant node 1260) may check its battery status, and if the remaining battery power is below a threshold, the potential tenant node (e.g., tenant node 1260) may attempt launching (e.g., deciding to have shared-PHY) a shared-protocol functionality scheme with a host node 1265 to save battery (e.g., by offloading some of its physical layer functionalities to another entity, which may be referred to as the host node 1265). On the other hand, the potential tenant node (e.g., tenant node 1260) may check whether it would beneficial to enter into shared-protocol functionality scheme in order to achieve performance gain via joint processing with another STA. For example, if a potential tenant node (e.g., tenant node 1260) is suffering from strong intra-cell interference due to downlink multiuser MIMO (MU-MIMO), the potential tenant node (e.g., tenant node 1260) may determine whether it would be beneficial (e.g., in terms of reduced interference) to pursue interference mitigation via joint processing enabled by shared-protocol functionality. The potential host node (e.g., host node 1265) may take one or more latency requirements into account before sharing its protocol functionalities. For example, if the potential host node (e.g., host node 1265) is running a delay-sensitive application, the potential host node (e.g., host node 1265) may determine whether the resultant latency caused by the potential shared-protocol functionality operation would be detrimental before entering into a shared-protocol functionality arrangement.

In an embodiment, the network (e.g., RAN) may trigger shared-protocol functionality operation and instruct a potential tenant node (e.g., tenant node 1260) to initialize the process. In such a case, the network may make the decision based on reporting (e.g., a periodic or event-triggered aperiodic status report) from potential tenant nodes (e.g., tenant node 1260). The status report may include information relating to battery status, link quality information (e.g., NACK count, RRM measurement, etc.) or the like. For example, if the network receives a status report indicating low battery power from a tenant node 1260, the network may decide to instruct the tenant node 1260 to enter shared-protocol functionality operation (e.g., by sending the tenant node 1260 a command message to initiate shared-protocol functionality operation). The command message may include information (e.g., host node ID, available shared-protocol functionality type, available split option, etc.) associating the potential tenant node (e.g., tenant node 1260) with at least one recommended host nodes (e.g., host node 1265). The tenant node 1260 may use such information to determine an appropriate (e.g., having acceptable latency, available computational resources, distance to device, etc.) host node (e.g., host node 1265).

In these examples, the STA (or node) and/or the network may decide whether shared-protocol functionality operation will be applied to all types of traffic or to only a subset of traffic. For example, in some implementations the STA (or node) and/or the network may determine that only traffic associated with a specific QoS class will be processed by shared-protocol functionality processing.

At step 1215, if the potential tenant node (e.g., tenant node 1260) has decided to attempt implementation of a shared-protocol functionality scheme at step 1210, the potential tenant node (e.g., tenant node 1260) may broadcast a shared-protocol functionality request message to nearby network entities (e.g., potential host node such as a host node 1265) to request a shared protocol functionality from at least one network entity (e.g., potential host node or another STA). The shared-protocol functionality request message may be broadcast or sent by dedicated signaling. The request message may include information relating to the identification of at least one specific potential host node (e.g., host node 1265).

Further, the request message may also include information relating to any one or more of desired performance, desired functional split configuration, and/or desired shared-protocol functionality type. Desired performance information can be based on an evaluation by the tenant node 1260 of a required data rate and/or latency of the transportation link for its MAC PDUs based on service type. Such information may be included in the request message to facilitate a decision by a network entity (i.e. a potential host node such as host node 1265) receiving the request message as to whether it is capable of, or whether it would be beneficial to, establish a direct link with this tenant node 1260 that satisfies these performance requirements. Desired functional split configuration information in the request message may include a functional split configuration desired by the tenant node 1260 (e.g., MAC-PHY split, intra-PHY split, or other higher layer splits). The request message may also indicate the highest functional split, which implies the functional split may vary with time and that any lower layer functional split below this indication may be used.

Desired-shared protocol functionality type information in the request message may include information regarding various options for shared-protocol functionality types. For example, such types may include one or more of a shared-protocol functionality where only a layer (e.g., PHY) for downlink is shared, where only a layer (e.g., PHY) for uplink is shared, where different functional split configurations are applied for downlink and uplink, where only a layer (e.g., PHY) for control-plane signals is shared, where only a layer (e.g., PHY) for data-plane signals is shared, where different functional split configurations are applied for control and data-planes, and/or where, for STAs with energy harvesting capabilities, only a layer (e.g., PHY) for information tunneling is shared.

At step 1120, each of the nearby network entities (e.g., host node 1265) that receive request message from the potential tenant node (e.g., tenant node 1260) at step 1215 may evaluate whether it is feasible or desirable for it to lend its protocol functionality (e.g., physical layer) to this potential tenant node (e.g., tenant node 1265) based on its own status. For example, a network entity (e.g., host node 1265) that receives such a request may check its spare computational resources and determine whether these resources are sufficient to instantiate a virtual machine to run protocol stacks for the potential tenant node (e.g., tenant node 1260). If the identity of at least one network entity is included in the request message, network entities whose identities are not included in the request message may simply ignore the request message. In another example, the receiving network entities may assess whether a desired QoS level is able to be satisfied based on desired QoS level, split level, available medium resources, etc., as included in the request message. For example, an eMBB service may be available for a PHY-MAC split level at 70% loaded medium status, but a UR-LLC service may not be available where strict latency requirements could not be met under the same conditions.

Those network entities receiving the request message that are able (and willing) to lend their protocol layer functionalities (e.g., physical layer functionalities) to the requesting potential tenant node (e.g., tenant node 1260) may send a response message to the potential tenant node (e.g., tenant node 1260). The response message may include information relating to one or more of a best performance metric the potential host node (e.g., host node 1265) can support (e.g., highest data rate, lowest latency, etc.), a subset of functional split configuration options that the potential host node can support, and/or a subset of shared-protocol functionality types that the potential host node can support.

At step 1225, after reception of a response from potential host nodes (e.g., host node 1265), the potential tenant node (e.g., tenant node 1260) may begin to establish a direct link with at least one of the network entities (e.g., potential host node) that have sent a response message (or an affirmative response message, depending on implementation). In this step, the potential tenant node (e.g., tenant node 1260) may select at least one network entity from which it has received a positive response, and may attempt to establish a direct link with the network entity via a second RAT (e.g., WiFi). During establishment of this link, the potential tenant node (e.g., tenant node 1260) may negotiate with the selected host node (e.g., host node 1265) to determine detailed configurations of the proposed shared-protocol functionality scheme. For example, the two nodes (potential tenant and potential host nodes) may determine whether both downlink and uplink physical layers will be shared, or if only the physical layer associated with one or the other of downlink or uplink should be shared.

It is noted that if the protocol stack is split below PDCP layer, security may be handled by PDCP layer.

At steps 1230 and 1235, after a direct link between the tenant node 1260 and host node 1265 is established, at least one of these two nodes may notify the base station 1250 with uplink control signaling. For example, at step 1230, the host node 1265 may notify the base station 1250 with the uplink control signaling. Alternatively or additionally, at step 1235, the tenant node 1260 may notify the base station 1250 with the uplink control signaling. At step 1240, the base station 1250 may configure its downlink and uplink with respect to these two nodes based on the shared-protocol functionality notification. For example, the number of receiver antenna ports of used for downlink by the host node 1265 may be reduced where some antenna ports are "lent" to the tenant node 1260 for its downlink. Thus, from the base station's 1250 perspective, STA capability or node capability can be dynamically changed.

At step 1245, after the direct link is established, wireless communication services (e.g., cellular communication or WiFi communication) may be conducted using the shared-protocol functionality scheme, where the layer (e.g., PHY) functionalities of the node (e.g., a tenant node 1260) are carried out by the host node 1265.

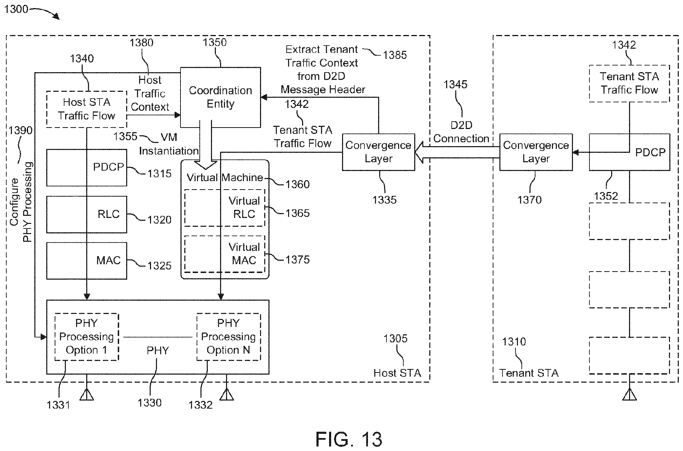

FIG. 13 illustrates an example coordination entity 1350 within a host station 1305 that oversees the status of host station 1305 and traffics from the host station 1305 and tenant station 1310, which may be used in combination with any of other embodiments described herein. As illustrated in FIG. 13, a coordination entity 1350 within the host station 1305 may be implemented to oversee the status of a host station (e.g., computing power, storage, etc.), host traffic, and/or tenant traffic (e.g., from the convergence layer 1335, 1370). With respect to the traffics from the host station 1305 and tenant station 1310, the coordination entity 1350 may create a host environment that can accommodate traffic from the tenant station 1310 while processing traffic from the host station 1305 (e.g., multiplexing the host traffic and tenant traffic). In other words, the coordination entity can manage processing of each protocol stack in host device 1305 to properly multiplex data flows of the two devices.

As illustrated in FIG. 13, the coordination entity 1350 perform one or more of: extracting tenant traffic context information 1385; extracting host (e.g., self) traffic context information 1380; determining required virtual machine capability; instantiating at least one virtual machine 1360; and/or determining a physical layer processing option 1331, 1332 and configuring the physical layer 1330.

Context information 1385 of at least one traffic flow belonging to tenant station 1310 (e.g., tenant STA traffic flow 1342) can be extracted from the convergence layer 1335 (e.g., based on reading a D2D header or device-haul header). The tenant traffic context information 1385 may include, but is not limited to, a functional split indicator and a performance requirement indicator. Context information 1380 of the traffic flow belonging to the host station 1305 itself (e.g., host STA traffic flow 1340) can also be extracted. The host traffic context information 1385 may include, but is not limited to, a data rate requirement, latency, and at least one type of service. Determining the required virtual machine capability (e.g., storage and/or processing power) may be followed by instantiating at least one virtual machine (VM) 1360 to perform shared-protocol functionality on behalf of the tenant station 1310. The determined virtual machine capability may include the availability of computational resources of the host station 1305. Determining the physical layer processing option 1331, 1332 and configuring the physical layer 1330 may be performed to process the two traffic flows (i.e. host STA traffic flow 1340 and tenant STA traffic flow 1342) using the same radio transceiver.

Depending on the functional split indicator (FSI), the coordination entity 1350 may instruct a hypervisor to instantiate a virtual machine 1360 to process the at least one protocol functionality on behalf of the tenant station 1310. For example, as illustrated in FIG. 13, if the FSI is a PDCP-RLC indicating functional split of the PDCP layer 1315, 1352 and the RLC layer 1320, the coordination entity 1350 may instantiate a virtual machine 1360 that can perform the RLC functionalities 1365, MAC functionalities 1375, and/or partial/complete PHY functionalities for the tenant station 1310. It may be observed that the lower the functional split is indicated, the less virtual machine capability may be required. For example, the coordination entity 1350 may determine and instantiate a virtual machine in accordance with the table 1 below:

**Table 1.**

| **Functional Split** | **Coordination Entity Hypervisor Action** |
|---|---|
| PDCP-RLC | Instantiate a virtual machine capable of processing RLC, MAC, and partial/complete PHY for PHY-Tenant device. |
| RLC-MAC | Instantiate a virtual machine capable of processing MAC, and partial/complete PHY for PHY-Tenant device. |
| MAC-PHY | Instantiate a virtual machine capable of processing PHY functionalities for PHY-Tenant device |
| Intra-PHY | Instantiate a virtual machine capable of processing upper or lower PHY functionalities for PHY-Tenant device or no virtual machine is needed |

In an embodiment, if the coordination entity 1350 determines that there is no traffic for the host station 1305 itself, or if the traffic flow 1340 of the host station 1305 itself is not urgent, the coordination entity 1350 may simply put the host station 1305 on hold and give priority to the tenant station 1310 to use all the protocol stacks - hence, a virtual machine may not be needed in this case. In another embodiment, instead of allowing the tenant station 1310 to use all of the protocol stacks, the coordination entity 1350 may instruct at least one tenant station 1310 to apply different segmentation and/or concatenation rules to adjust PDU sizes, in order to multiplex traffic flows of different devices.

As illustrated in FIG. 13, multiple PHY processing options 1331, 1332 are possible in the physical layer 1330. The coordination entity 1350 may select one or more PHY processing options 1331, 1332 that permit both traffic flows (i.e. host STA traffic flow 1340 and tenant STA traffic flow 1342) in the same transceiver platform. For example, the two traffic flows 1340, 1342 may be accommodated using spatial multiplexing, where multiple spatial streams (e.g., the number of which depending on the number of antenna ports of the host station 1305) are shared by the two traffic flows 1340, 1342. In another example, in a case where both host station 1305 and tenant station 1310 are attempting uplink transmissions, the host station 1305 can support up to 4 uplink spatial streams. Four example processing options for stream reservation are possible as described in table 2 below. The stream reservation in this case may refer to a subset of supportable streams being reserved for the host station 1305 and/or tenant station 1310. In another example, an explicit subset of spatial streams can be reserved for the host station 1305 and/or tenant station 1310.

**Table 2.**

| **PHY Processing Option** | **Number of spatial streams reserved for Host Station** | **Number of spatial streams reserved for Tenant Station** |
|---|---|---|
| 1 | 1 | 3 |
| 2 | 2 | 2 |
| 3 | 3 | 1 |
| 4 | 4 | 0 |

The PHY processing options are not limited to the number of spatial streams reserved for the host station 1305 and tenant station 1310. Other example processing options may include transmission power allocation between a host station 1305 and a tenant station 1310; transmission time allocation between a host station 1305 and a tenant station 1310; frequency band allocation between a host station 1305 and a tenant station 1310, code allocation (e.g., sequence for reference signals) between a host station 1305 and a tenant station 1310, and/or computational power allocation (e.g., number of multipliers and/or adders for receiver algorithms) between a host station 1305 and a tenant station 1310.

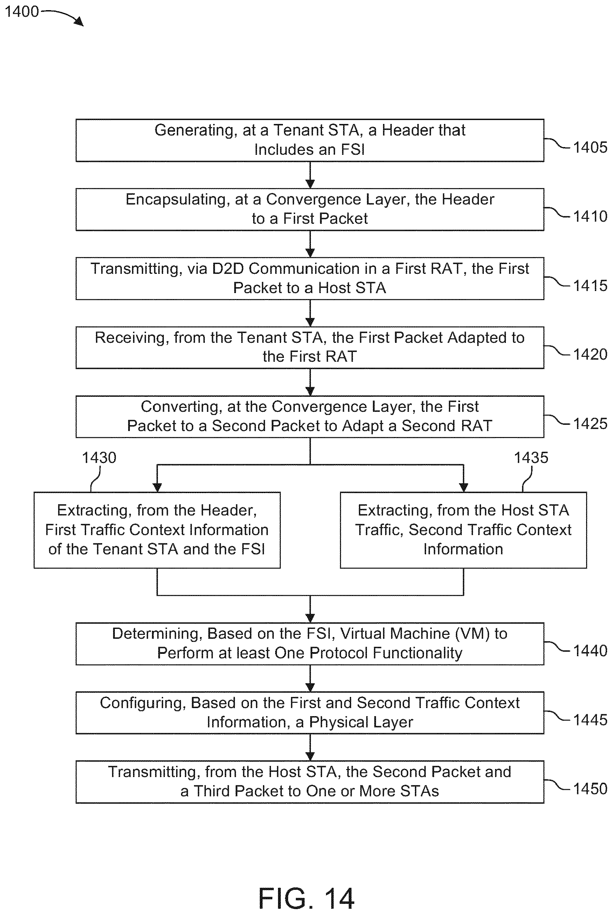

FIG. 14 illustrates an example procedure 1400 for shared-protocol functionality to provide two traffic flows from a host station and a tenant station using the same radio transceiver, which may be used in combination with any of other embodiments described herein. At step 1405, a header may be generated at a tenant station to indicate that the data packet (e.g., first packet) that the tenant station is transmitting is for the shared-protocol functionality. The header may include one or more fields indicating the shared protocol functionality, a tenant/host station identification, a functional split indication (FSI), a performance requirement indication, a D2D (or device-haul) data/control indication, a RAT data/control indication, a sequence number (and/or time stamp), or the like. The header may be interchangeably referred to as a D2D header or a device-haul header. The FSI may indicate one or more protocol functionalities to be shared by the host station. Specifically, the FSI may include an indicator indicating a packet data convergence protocol-radio link control (PDCP-RLC) split, a radio link control-medium access control (RLC-MAC) split, a medium access control-physical layer (MAC-PHY) split, intra-PDCP split, intra-RLC split, intra-MAC split, and intra-PHY split. The one or more protocol functionalities may be protocol operations performed by lower layers in the protocol stack of the host node. The FSI may indicate at which point within a layer and/or where in the protocol stack, the tenant station and/or host station may begin to share the one or more protocol functionalities. For example, in case of a MAC-PHY split, the tenant station performs its protocol operation for the data packet up to the MAC layer of the tenant station's protocol stack. After the MAC layer, the host station performs the protocol operation for the data packet on behalf of the tenant station.

At step 1410, the header may be added or encapsulated at a convergence layer of the tenant station to the PDUs/SDUs of the data packet to adapt the PDUs/SDUs to a packet structure that is applicable to a first RAT (e.g., WiFi) data format. At step 1415, the tenant station may transmit, via a D2D connection in the first RAT(e.g., WiFi), the adapted PDUs/SDUs to the host node. Once the adapted PDUs/SDUs are received at the host station at step 1420, the header may be removed at a convergence layer of the host station to adapt the PDUs/SDUs to a packet structure that is applicable to a second RAT (e.g., cellular) data format at step 1425. By the convergence layers, the host node and tenant node can share the same RAT protocol stack via a D2D connection in the first RAT (e.g., WiFi). For example, in case of a MAC-PHY split, the PDUs/SDUs processed at the MAC layer of the tenant node may be converted by the convergence layer to adapt the data format of the first RAT (e.g., WiFi). The PDUs/SDUs adapted to the first RAT (e.g., WiFi) may be transmitted, via the D2D connection in the first RAT, to the host station. The adapted PDUs/SDUs are received at the host station may be converted again to adapt the data format of the second RAT (e.g., cellular).

Once the PDUs/SDUs are received from the tenant node, the tenant node's traffic context information may be extracted from the header at step 1430. The tenant node's traffic context information may include, but is not limited to, the functional split indicator (FSI) and a performance requirement indicator. Whether the PDUs/SDUs are received from the tenant node or not, the host node's traffic context may be extracted from the host node periodically or upon request at step 1435. At step 1440, the host node may determine, based on the FSI, at least one virtual machine that is to perform one or more protocol functionalities indicated by the FSI. At step 1445, the host node may configure, based on the host node's traffic context and tenant node's traffic context, the physical layer of the host node. Specifically, the host node may determine one or more PHY processing options to transmit both traffic flows (e.g., a second packet for the tenant node's traffic flow and a third packet for the host node's traffic flow) in the same transceiver platform over the second RAT (e.g., cellular).

It should be noted that the first and second RATs illustrated in FIG. 14 or any other embodiments described in this disclosure can be any type of physical or logical connection method for a radio based communication network. Examples of RATs described herein include, but are not limited to, Bluetooth, WiFi, 3G, 4G, 5G, LTE, New Radio, WiFi Direct, NFC, Zigbee, Ultra-wideband, Fiber Wireless Access Network (FiWi), and Visible Light Wireless Access Network.

FIG. 15 illustrates four different example scenarios for inter-cell interference mitigation based on a shared-protocol functionality scheme. FIG. 15 assumes that STA1 (host device) 1505 and STA2 (tenant device) 1510 are connected to two different cells (e.g., base stations, BS1 1515 and BS2 1520) operating on the same frequency band (e.g., small cell networks with a frequency reuse of one). In such cases, both STA1 1505 and STA2 1510 may suffer from strong downlink and/or uplink inter-cell interference. By applying shared-protocol functionality scheme, various interference mitigation schemes can be employed to resolve inter-cell interference issues.

As illustrated in FIG. 15, four different example scenarios (i.e. scenarios 1-4) may be implemented for inter-cell interference mitigation based on a shared-protocol functionality. In the example scenario 1, if both STA1 1505 and STA2 1510 are launching uplink transmissions to the BS1 1515 and BS2 1520 respectively, the joint PHY processing 1530 (e.g., joint precoding) can be used, since their physical layers are co-located. In other words, pre-PHY UL packets 1525 may be transmitted from the tenant device 1510 to the host device 1505, and a precoding matrix can be constructed and applied in the host device 1505 to separate the uplink signals (i.e. STA1 uplink 1535 and STA2 uplink 1540) by steering them in different directions. In the example scenario 2, if both STA1 1505 and STA2 1510 are scheduled in the same resource for downlink services, techniques (e.g., successive interference cancellation (SIC)) can be leveraged to mitigate interference. For example, the host device 1505 may first decode downlink signals (e.g., STA1 downlink 1550 and STA2 downlink 1555) for the tenant device 1510, and use the decoded information to extract its own desired information from the received downlink signals (e.g., based on symbol-level or codeword-level interference cancellation). The host device 1505 may then transmit the post-PHY DL packets 1560 to the tenant device 1510.

In the example scenario 3, the service direction may be different for STA1 1505 and STA2 1510 at the same time (e.g., uplink 1580 for STA2 1510 and downlink 1575 for STA1 1505). In such cases, technologies such as full-duplex communication may be implemented to remove interference. For example, the host device 1505 may receive pre-PHY UL packets from the tenant device 1510. The host device 1505 may then, based on the full-duplex processing 1565, transmit STA2 uplink packet 1580 to the BS2 1520 and receive STA1 downlink packet 1575 from the BS1 1515 at the same time. In the example scenario 4, the service direction may also be different for STA1 1505 and STA2 1510 at the same time (e.g., uplink 1590 for STA1 1505 and downlink 1595 for STA2 1510). In such cases, similar to the scenario 3, technologies such as full-duplex communication may be implemented to remove interference. For example, based on the full-duplex processing 1585, the host device 1505 may transmit the STA1 uplink packet 1590 to the BS1 1515 and receive the STA2 downlink packet 1595 from the BS2 1520 at the same time. The host device 1505 may then transmit post-PHY UL packets 1597 to the tenant device 1510.

Although features and elements are described above in particular combinations, one of ordinary skill in the art will appreciate that each feature or element can be used alone or in any combination with the other features and elements. Any combination of the disclosed features/elements may be used in one or more embodiments. In addition, the methods described herein may be implemented in a computer program, software, or firmware incorporated in a computer-readable medium for execution by a computer or processor. For example, a coordination entity, virtualization machine, convergence layer, protocol functionality, or protocol layer described herein may be implemented in a computer program, software, and firmware incorporated in a computer-readable medium for execution by a computer or processor or hardware such as processor, antenna and transceiver. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method for use in a host node, the method comprising:
receiving, from a tenant node, a first packet adapted to a first radio access technology (RAT), wherein the first packet is encapsulated with a header including a functional split indicator indicating at least one protocol functionality to be performed by the host node; and
transmitting, via the at least one protocol functionality, a second packet adapted to a second RAT, wherein the second packet is converted from the first packet by a convergence layer to adapt the second RAT.

2. The method of claim 1, wherein the functional split indicator includes a packet data convergence protocol-radio link control (PDCP-RLC) split, a radio link control-medium access control (RLC-MAC) split, a medium access control-physical layer (MAC-PHY) split, intra-PDCP split, intra-RLC split, intra-MAC split, and intra-PHY split.

3. The method of claim 1, wherein the at least one protocol functionality includes at least one operation performed by lower layers, wherein the lower layers comprise at least one of a PHY layer, a MAC layer, a RLC layer, or a PDCP layer.

4. The method of claim 1, further comprising:
receiving, from the tenant node, the first packet via a device-to-device (D2D) communication in the first RAT.

5. The method of claim 1, further comprising:
transmitting, from the host node, the second packet and a third packet to one or more nodes, wherein the second packet includes one or more protocol data units/service data units (PDUs/SDUs) associated with the tenant node and the third packet includes one or more PDUs/SDUs associated with the host node.

6. The method of claim 5, further comprising:
determining first traffic context of the second packet;
determining second traffic context of the third packet; and
determining, based on the first traffic context and the second traffic context, the at least one protocol functionality to transmit the second packet and the third packet.

7. The method of claim 6, wherein the first traffic context comprises the functional split indicator and a performance requirement indicator and the second traffic context includes a data rate requirement, latency, and at least one type of service.

8. The method of claim 6, wherein the host node is a mobile station (MS) and the tenant node is an Internet of Thing (loT) device, wherein the first RAT is a wireless local area network (WLAN) and the second RAT is a cellular network.

9. A host node comprising:
a receiver configured to receive, from a tenant node, a first packet adapted to a first radio access technology (RAT), wherein the first packet is encapsulated with a header including a functional split indicator indicating at least one protocol functionality to be performed by the host node; and
a transmitter configured to transmit, via the at least one protocol functionality, a second packet adapted to a second RAT, wherein the second packet is converted from the first packet by a convergence layer to adapt the second RAT.

10. The host node of claim 9, wherein the functional split indicator includes a packet data convergence protocol-radio link control (PDCP-RLC) split, a radio link control-medium access control (RLC-MAC) split, a medium access control-physical layer (MAC-PHY) split, intra-PDCP split, intra-RLC split, intra-MAC split, and intra-PHY split.

11. The host node of claim 9, wherein the at least one protocol functionality includes at least one operation performed by lower layers, wherein the lower layers comprise at least one of a PHY layer, a MAC layer, a RLC layer, or a PDCP layer.

12. The host node of claim 9, wherein the receiver is further configured to receive, from the tenant node, the first packet via a device-to-device (D2D) communication in the first RAT.

13. The host node of claim 9, wherein the transmitter is further configured to transmit the second packet and a third packet to one or more nodes, wherein the second packet includes one or more protocol data units/service data units (PDUs/SDUs) associated with the tenant node and the third packet includes one or more PDUs/SDUs associated with the host node.

14. The host node of claim 13, further comprising:
a processor configured to:
determine first traffic context of the second packet;
determine second traffic context of the third packet; and
determine, based on the first traffic context and the second traffic context, the at least one protocol functionality to transmit the second packet and the third packet.

15. The host node of claim 14, wherein the first traffic context includes the functional split indicator and a performance requirement indicator and the second traffic context includes a data rate requirement, latency, and at least one type of service.
